# EUROPEAN PATENT SPECIFICATION

(11) **EP 1 507 091 B1**
(45) Date of publication and mention of the grant of the patent: **30.08.2006**
(21) Application number: 04254048.4
(22) Date of filing: 06.07.2004
(51) Int. Cl.: F16D 23/02, F16D 23/04, F16D 23/06

(54) **Segmented synchroniser clutch**
Segmentierte Synchronisierkupplung
Embrayage segmenté de synchronisation

(30) Priority: 11.08.2003 GB 0318805
(43) Date of publication of application: 16.02.2005
(73) Proprietor: BorgWarner Inc., Auburn Hills, MI 48326-2872 (US)
(72) Inventor: Roberts, Keith, Maesteg, Glamorgan, South Wales CF34 9RY (GB); Skipper, Gary, Swansea SA4 3GH (GB)
(74) Representative: Hedges, Martin Nicholas

(56) References cited:
- EP-A- 0 756 098
- EP-A- 1 199 489
- EP-A- 1 201 952
- US-A- 3 366 208

## Description

The present invention relates to automotive transmissions and more particularly to synchroniser clutches for controlling changes in transmission gearing.

Synchroniser clutch assemblies are used to facilitate the smooth engagement of meshing teeth during changes of gear in a transmission. A typical assembly includes a hub positioned between two gears of different pitch diameter, the hub having a central opening in which are formed a plurality of teeth for drivingly mounting the hub on a drive shaft. A clutch sleeve with internal clutch teeth is mounted for axial sliding movement on the hub, and each gear also carries corresponding external sleeve teeth which are engageable by the inner teeth of the sleeve in order to create a drive path from the shaft, through the hub and sleeve to the gear. Each gear also carries an external cone clutch surface which is engageable by a complementary internal cone clutch surface formed on a synchroniser ring disposed between the hub and each gear. Upon movement of the sleeve towards a gear, the associated synchroniser rings is first engaged and caused to move axially towards the gear so as to bring its internal cone surface into engagement with the external surface formed on the gear. The resulting frictional engagement ensures that the speeds of the hub and gear are synchronised before the sleeve is slide further into engagement with the sleeve teeth of the gear, thereby ensuring smooth engagement. Examples of such synchronisers are shown in European Patent no. 0756098, US-A-2221900 and US-A-3366208.

These conventional synchronisers have the disadvantage, however, that if the cone surfaces on the gear and the synchroniser ring are formed with taper angles that are too small, that is which are shallower than the friction angles determined by the material dependent frictional µ factors, then cone jam occurs, in which the frictional forces between the synchroniser ring and the gear are so great as to prevent disengagement of the two parts, and hence jam the transmission in gear.

EP-A-1199489 discloses a conical synchroniser ring for a synchronisation device of a manual gearbox, the synchroniser ring having an outer friction surface for friction contact with an outer synchronous ring of the manual gearbox as well as an inner friction surface for friction contact with an inner synchronous ring of the manual gearbox, the periphery of the conical ring being split so as to form an expansion point which allows radial widening or compression of the conical ring.

According to the present invention there is provided a clutch hub assembly which, in use, is non-rotatably but axially movably mounted on a torque delivery shaft, at least one gear assembly which is axially spaced from the hub assembly and which, in use, is journal mounted on the shaft so as to be rotatable independent thereof, one of the hub assembly and the at least one gear assembly having a conical friction surface formed thereon, at least one synchroniser ring positioned between the hub assembly and the at least one gear assembly, the or each synchroniser ring being coupled to the other of the hub assembly and the at least one gear assembly for rotation therewith and having a complementary conical friction surface formed thereon which is engageable with the conical friction surface of the one of the hub assembly and the at least one gear assembly in order create a drive coupling therebetween, characterised in that the or each synchroniser ring is composed of a plurality of separate arcuate segments arranged in a ring, which segments are movable between a first expanded configuration in which the synchroniser ring has a first radius and a second contracted configuration in which the ring has a second radius, movement of the hub assembly towards the at least one gear assembly urging the segments of the or each synchroniser ring, into one of said first and second configurations so that the conical friction surface of the ring is pressed against the friction surface of the one or the hub assembly and the gear assembly, thereby drivingly coupling the hub assembly to the at least one gear assembly.

The present invention further provides a synchroniser ring for a synchroniser clutch assembly according to the invention, comprising a plurality of separate arcuate segments arranged to form a closed ring, each segment including a friction surface which together form a conical friction surface for the synchroniser ring.

A synchroniser clutch assembly according to the invention and a synchroniser ring there-for has the advantage that it simplifies transmission synchronisation by eliminating the need for a separate synchroniser ring, sleeve struts and drive teeth and all the functional variables associated with these separate components. Furthermore, the segmented synchroniser ring eliminates the possibility of cone jam occurring during disengagement of a gear, thereby enabling cone angles to be used which are much smaller than has been possible with conventional synchroniser systems, and hence allowing cone torque to be increased.

The elimination of dogteeth on the synchroniser ring also simplifies the structure of the assembly and the associated manufacturing costs and also makes engagement much smoother.

In the preferred embodiment, the conical friction surface of the one of the hub and the gear is formed as an external cone surface which is engaged by an internal friction cone surface formed on the synchroniser ring, biasing means being associated with the segments of the ring which urge them into their expanded configuration. This has the advantage that, upon release of the engagement force from the hub, the segments will automatically lift off from the friction surface of the hub/gear, thereby ensuring reliable disengagement of drive through the gear. Movement of the hub towards the gear then causes the segments to be pressed towards their contracted configuration and into engagement with the friction surface against the biasing load of the biasing means. The biasing means particularly advantageously take the form of a plurality of segment springs which are positioned between adjacent segments and urge them circumferentially apart. Each segment is, then, advantageously formed with a recess in each circumferential end for location of the segment springs.

In an alternative embodiment not shown, the one of the hub and the gear is formed with an internal friction cone surface which is engaged by an external cone surface formed on the synchroniser ring, the segments being urged into their expanded configuration upon movement of the hub towards the gear so as to frictionally engage the cone and effect a drive coupling between the hub and the gear. A spring band member may also then be provided around the segments, for example housed within a circumferential groove formed in the segments which urges them into their contracted configuration upon movement of the hub away from the gear.

In one embodiment, the gear is formed with a first internal friction cone surface and a second external cone surface, the assembly including a first segmented synchroniser ring associated with the first cone surface, which first ring has an external cone surface formed thereon, and a second segmented synchroniser ring associated with the second cone surface, which second ring has an internal cone surface formed thereon, movement of the hub towards the gear urging the segments of the fist synchroniser ring radially outward into engagement with the first cone surface of the gear and urging the segments of the second synchroniser ring radially inwards into engagement with the second cone surface of the gear. In this way, the torque capacity of the clutch is significantly increased in a manner which has not been possible with conventional assemblies due to the high risk of friction locking.

In one further embodiment, the conical friction surface is formed on the gear and the synchroniser ring is housed within the hub. However, the reverse configuration, with the conical friction surface or surfaces being formed as the hub may also be used.

Drive coupling between the or each synchroniser ring and the other of the hub and the gear is preferably effected by means of a plurality of radial tabs formed on the segments which engage in radial pockets formed in the other of the hub and the gear. This arrangement provides a reliable coupling between the hub which is also quick and easy to assemble. The relative radial extent of the tabs and pockets should be such that engagement is maintained in both the expanded and the contracted configurations of the segments.

In order that the invention may be well understood, there will now be described some embodiments thereof, given by way of example, reference being made to the accompanying drawings, in which:
Figure 1 is a sectional side view of a synchroniser assembly of a first embodiment of the invention;
Figure 2 is a sectional side view of a hub which forms part of the assembly of Figure 1;
Figure 3 is a perspective view of the hub of figure 2;
Figure 4 is a perspective view of a segment of a segmented synchroniser ring which forms part of the present invention;
Figure 5 is an exploded perspective view of the hub and synchroniser ring;
Figure 6 is an end view of the hub of Figure 2 with the segmented synchroniser ring mounted therein;
Figure 7 is a perspective, cut away view of left and right segmented synchroniser rings with associated release springs;
Figure 8 is an end view of the segmented synchroniser ring;
Figure 9 is a cut away view of the assembled synchroniser rings and release springs;
Figure 10 is a perspective view of a hub and synchroniser ring assembly according to a second embodiment of the invention in which each side of the hub is provided with a pair of segmented synchroniser rings;
Figure 11 is an exploded view of the clutch hub assembly of Figure 10 with mating synchroniser engagement plates; and
Figure 12 is a sectional side view of a synchroniser assembly according to a second embodiment of the invention.

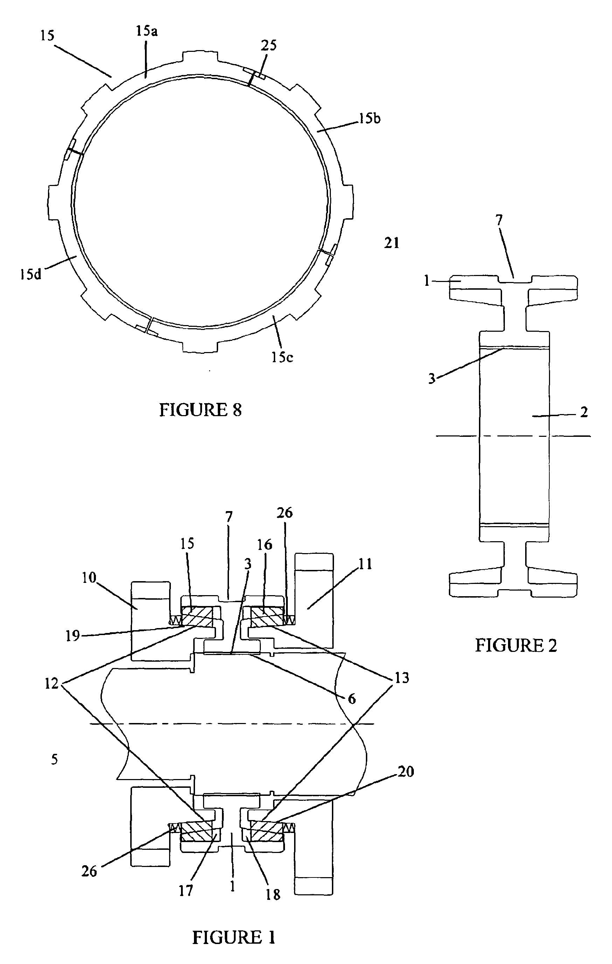

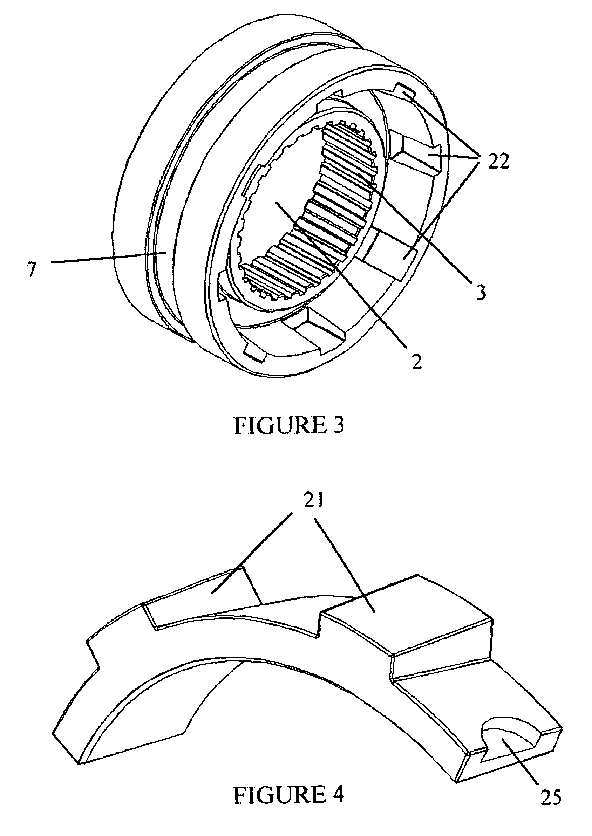

Referring first to Figure 1, there is shown a sectional side view of a bi-directional segmented synchronising clutch assembly according to the invention. The assembly includes a hub 1 having a central opening 2 on the inner circumferential surface of which is formed a plurality of teeth 3 as shown more clearly in Figure 3. A shaft member 5 extends through said opening 2 in the hub 1 and has a plurality of external splines or teeth 6 which engage with the teeth 3 of said opening 2 so that the hub is secured to and rotates with the shaft 5 whilst permitting axially movement of the hub along the shaft. Such axial movement of the hub 1 is effected by means of a linkage arm (not shown) which engages in a circumferential groove 7 formed in the outer surface of the hub 1, and may be achieved manually, hydraulically, electronically, electro-magnetically or any other well known means.

The hub 1 is positioned on the shaft 5 between a pair of gears 10, 11 having different gear ratios. In the assembly shown in Figure 1, the left hand gear 10 is a large pitch diameter gear and the right hand gear 11 is a small pitch diameter gear. Each gear 10, 11 is journal mounted on the shaft 5 so as to be rotatable about the longitudinal axis of the shaft independent thereof, and each meshes with an associated second gear (not shown) which is, in turn, drivingly mounted on a second shaft (not shown) for transmitting drive between each said gear 10, 11 and said second shaft.

Each gear 10, 11 is further formed with a circumferentially extending conical friction surface 12, 13 on its side facing the hub 1, which surface tapers inwardly towards the hub 1 as shown in Figure 1. Synchroniser rings 15, 16 are positioned in axially extending recesses 17, 18 formed in opposite sides of the hub 1, and the inner circumferential surface 19, 20 of each ring 15, 16 is formed as an internal cone clutch surface having an angle of inclination corresponding to the angle of the corresponding cones surfaces 12, 13 of the gears 10, 11. The inner surfaces 19, 20 of the rings 15, 16 may also be covered with friction members (not shown) which are well known in the art. The matching contact angles on the cone surface of the gears 10, 11 and the synchroniser rings 15, 16 is calculated from the µ factor of the construction material used to achieve ease of cone disengagement.

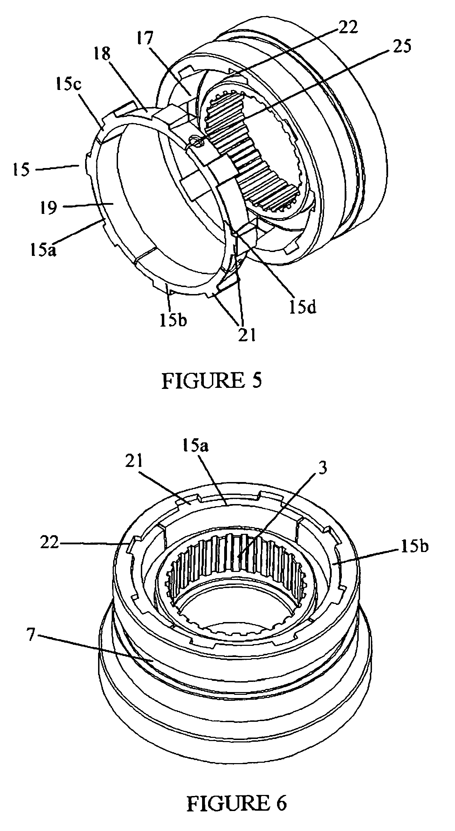

As more clearly shown in Figures 5 and 8, each ring 15, 16 is formed from a plurality of individual arcuate segments 15a,15b, 15c, 15d, which are arranged circumferentially to form a closed segmented synchroniser ring 15. One such segment is shown in Figure 4. In the illustrated embodiment, the ring is formed from four identical segments which each subtend an angle of substantially 90 degrees. However, it will be understood that more or less segments may be used, and that the segments may be of differing circumferential extents. Each segment further more includes a plurality of radially extending tabs 21 on its outer circumferential surface which engage in complementary shaped pockets 22 formed in the inner circumferential surface of each opening 17, 18 of the hub so as to couple the segments to the hub to prevent relative rotational movement therebetween. Camming surfaces (not shown) are also provided in the openings 17, 18 in the hub which press the segments towards the gear cone 12, 13 upon movement of the hub 1 towards the gear 10, 11, and a separating spring 25 is positioned between adjacent segments 15a, 15b which urges the segments apart and hence biases the segmented ring 15, 16 into an expanded configuration in which it adopts its maximum possible radial size. The extent of this expansion is limited by the relative radial sizes of the segmented rings 15, 16 and the recesses 17, 18 in the hub 1 in which they are housed.

The camming action may be developed between the outer surfaces of the tabs 21 and the inner surfaces of the pockets 22 in the openings 17,18, or may be developed between the outer surfaces of the portions of the segments extending between the tabs 21 and the corresponding portions of the openings 17,18.

Furthermore, the separating springs 25 may be housed within recesses in the surface of the segments as shown or may take the form of compression springs which are housed in circumferentially extending bores formed in the mating circumferential faces of the segments.

A return spring 26 is also positioned around the conical friction surface 12, 13 of each gear 10, 11, between each gear 10, 11 and its associated synchroniser ring 15, 16, each return spring 26 engaging the front axial face of the associated synchronising ring and urging it away from the gear, towards the hub 1, and hence out of engagement with the conical friction surface of the gear. Due to the speed differential between the gear and the hub 1 before synchronisation commences, a spring plate (30) is positioned between the segments and each return spring 26 so as to provide a true running surface.

### The assembly operates as follows:

In the neutral position, the hub 1 is positioned mid-way between the two gears 10, 11 in which position the biasing force of the return springs 26 associated with the gears 10, 11 is balanced. The separating springs positioned between the segments of each synchroniser ring 15, 16 biases the segments apart and cause the rings to expand radially to their maximum permissible size, thereby ensuring that the inner surfaces 19, 20 of the synchroniser rings 15, 16 are fully disengaged from the conical friction surfaces of the gears 10, 11 and hence that the hub 1 and shaft 5 are free to rotate together independently of each of the gears 10, 11.

In order to engage the large pitch diameter gear 10, the hub 1 is moved axially on the shaft towards that gear by operation of the linkage arm, against the loading of the return spring. As the hub 1 moves along the shaft 5, the segments 15a, 15b, 15c, 15d of the synchroniser ring 15 are initially moved axially towards the gear 10 by the engagement drive due to the engagement of the inner axial faxes of the tabs 21 with the axial end faces of the recesses 22 of the hub, until the inner cone surface 19 of the synchroniser ring 15 makes contact with the outer cone surface 12 of the gear 10 and begins to synchronise the speed of the two parts. At this stage, the frictional contact between the two cone surfaces inhibits the further axial movement of the segments and the engagement force on the hub causes the segments to be pressed firmly against and eventually locked onto the gear cone 12, thereby achieving the drive coupling between the hub and the gear. Since the drive coupling is effected only by means of the frictional engagement between the two cone surfaces, synchronisation is achieved automatically through slippage between the friction surfaces during the initial engagements.

In order to disengage the drive to the gear, the hub 1 is moved axially away from the gear 10, releasing the engagement pressure of the synchroniser ring cone surface 19 on the gear friction surface 12. The return spring 26 is then free to urge the ring segments 15a, 15b ,15c, 15d axially away from the gear 10 , thereby disengaging them from the cone surface 12 of the gear 10 and hence breaking the drive linkage between the shaft and the gear 10. Once the engagement pressure of the hub on the segments is removed, it is impossible for so called cone-lock to occur, that is for the segments 15a, 15b, 15c, 15d to remain locked on the gear cone, since the action of the separating spring 25 urges the individual segments of the synchroniser ring 15 apart, thereby ensuring that segments lift off of the cone face 12 of the gear so as to break the frictional engagement therebetween and hence that there is no impedement to the return spring moving the segments with the hub to the neutral position. Reliable disengagement of the gear 10 is thereby ensured for all cone angles, and the radial gap between the synchroniser rings 15, 16 and the cone surfaces 12, 13 of the gears resulting from the expansion of the rings when in their neutral position ensure drag is eliminated whilst enabling lubrication of the friction material to take place.

Engagement and disengagement of the small pitch diameter gear is achieved in a similar fashion, with the separating springs 26 on the free running gear side of the hub ensuring that synchroniser ring on that side is kept clear of the cone surface of that gear.

Although in the above described embodiment the gears carry the conical friction surface and the segments of the synchroniser ring are housed in and permanently non-rotatably coupled to the hub, it will, of course, be understood that the present invention also allows this configuration to be reversed so that the hub is provided with a conical friction surface associated with each gear and each synchroniser is non-rotatably coupled to a gear, movement of the hub towards one of the gear causing the synchroniser ring mounted to that gear frictionally to engage the friction surface of the hub and hence to drivingly couple the hub to the gear.

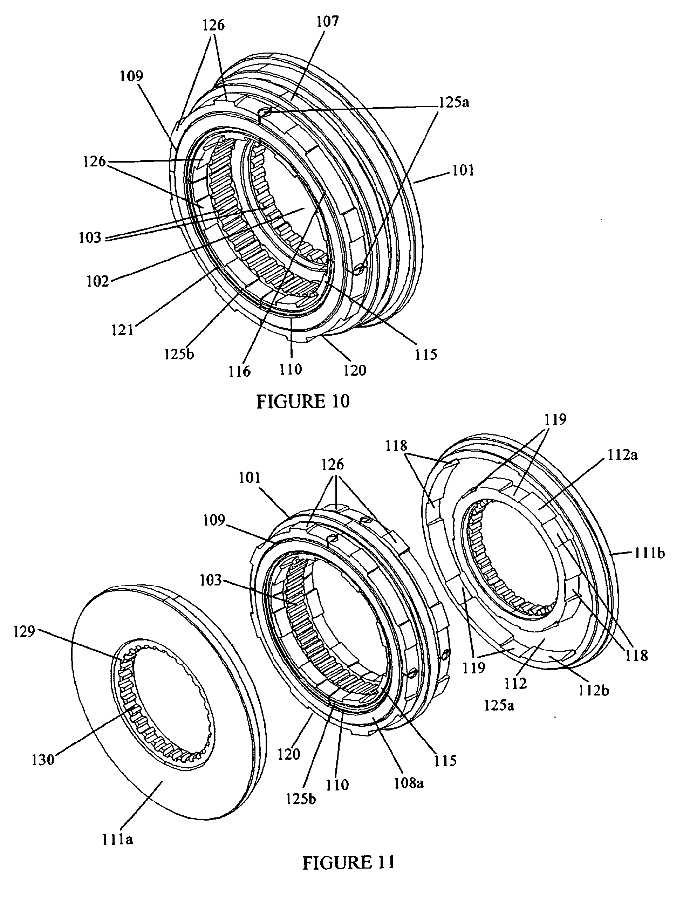

Referring now to Figures 10 to 12, there is shown a second embodiment of the invention. The hub 101 of this embodiment again has a central opening 102 for mounting onto a drive shaft and splines 103 formed on the surface of said opening for non-rotatably but axially slidably mounting the hub to the shaft. The hub 101 has a tapering annular axial extension 108a,b formed on each side, the outer annular surface 109 of which tapers radially inwardly as it extends away from the hub so as to form an outer frusto conical friction surface 109 and the inner annular surface 110 of which tapers radially outwardly in a direction away from the hub 101 so as to form an inner frusto conical friction surface 110.

A first outer segmented synchroniser ring 115 is arranged around the outer frusto conical surface 109 of the hub, the outer segmented ring 115 having an inner frusto conical friction surface 116 formed thereon which, upon contraction of the ring 115, engages the outer friction surface 109 of the hub so as to effect a drive coupling therewith. A second inner segmented synchroniser ring 120 is also positioned radially inwardly of the inner frusto conical surface 110 of the hub, the inner segmented ring 120 having an outer frusto conical friction surface 121 formed thereon which, upon radial expansion of the ring 120, engages with the inner frusto conical friction surface 110 of the hub 101 so as to effect a drive coupling therewith. Separating springs 125a are provided between the segments of the outer ring 115 which operate to urge the segments radially apart and hence bias the fist outer ring 115 into a de-energised position, whilst suitable compliant restraining means such as a spring clip 125b extends around the segments of the inner segments synchroniser ring 120 so as to urge the segments thereof radially inwards into engagement with each other and hence bias the inner ring 120 also into a de-energised position. Each of the segments of the inner and outer rings 115,120 also have radial tabs 126 formed on the radial surface opposite the friction surface, the tabs 126 of the outer ring 115 extending radially outwardly from the outer surface of the segments and the tabs 126 of the inner ring 120 extending radially inwards from the inner surface of the segments.

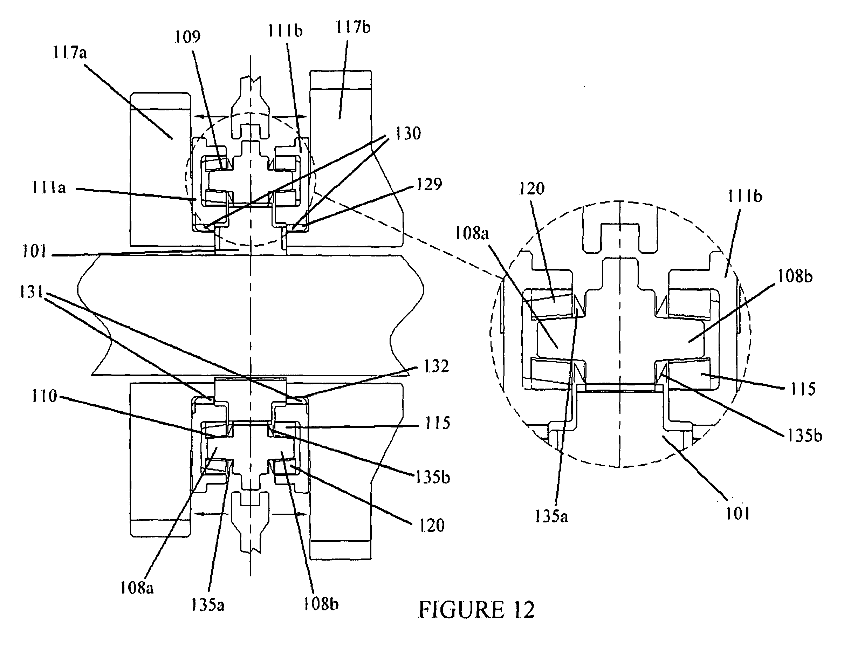

An engagement plate 111a,111b is provided on each side of the hub 101, each plate 111a,111b being non-rotatably mounted on its associated gear and having an annular recess 112 formed in its side facing the hub 101 in which the facing annular extension 108a, 108b, of the hub 101 engages. The inner 112a and outer 112b radial surfaces of the recess 112 have pockets 119 formed therein in which the tabs 126 of the synchroniser rings 115,120 engage so as non-rotatably to couple the synchroniser rings 115,120 to the engagement plate 111a. The height of the tabs 126 and depth of the pockets 119 are such that the tabs remain engaged in the pockets and hence the rings 115,120 remain coupled to the plate 111a as each ring moves between its expanded and its contacted configuration. The relative dimensions of the engagement plate 111a, the hub 101 and the drive shaft are such that the engagement plate does not interfere with rotation of the drive shaft whilst the inner and outer surfaces of the recess 112 limit respectively the maximum expansion and contraction of the outer and inner synchroniser rings 115,120 and hence maintains the segments in place around the friction surfaces formed on the hub 101. As illustrated in Figures 11 and 12, the engagement plates 111a,111b are formed separately from the gears and have splines 130 formed on their inner circumferential surface 129 which engage with complementary shaped splines 131 formed on an outer circumferential surface 132 of each gear so as non-rotatably to lock each engagement plate 111a, 111b to its associated gear 117a, 117b, this arrangement having the advantage of simplifying manufacture and assembly of the clutch. However, the skilled person will understand that each engagement plate may alternatively be integrally formed with its associated gear.

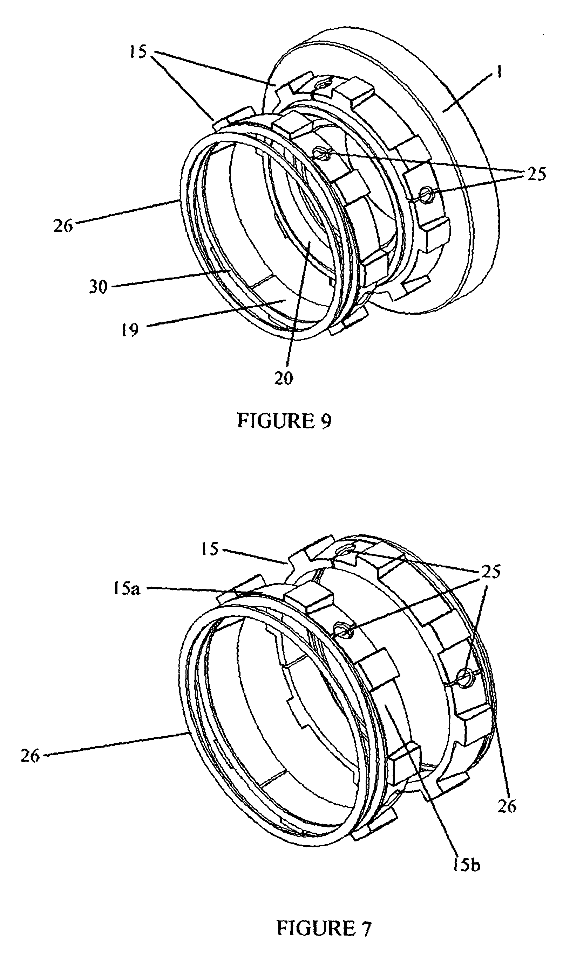

At least one of the pockets 119 formed in the recess 112 of each engagement plate 111a, 111b and the tabs 126 of the synchroniser rings 115, 120 are formed with camming surfaces such that, upon movement of the hub 101 towards one of the gears 117a, 117b, interaction of the tabs 126 with the bottom of the pockets 119 develops a camming action which urges the tabs 126 out of the pockets 119 and hence presses the segments into engagement with the associated friction surface 109, 110 of the hub 101 in similar manner to the embodiment of Figures 1 to 9. In this way, as the hub is pressed towards one of the gears, both the inner ring 115 and the outer ring 120 simultaneously engage opposite sides of the annular axial extension 108 of the hub, producing a particularly effective synchronising load whilst minimising stresses in the axial extension 108 due to the engagement forces being balances. Alternatively, the camming action might be developed between the sections of the segments extending between the tabs 126 and the corresponding surfaces of the recesses 12.

Upon releasing the axial engagement load from the hub 101 in order to disengage drive through the engaged gear, thereby removing the cam loading on the segments, if there is any cone lock between the segments and the hub 101, the segments will initially move axially with the hub 101 away from their associated gear into a position in which there is a radial clearance between the inner and outer segments 115, 120 and the associated plate 111a, 111b. The biasing force exerted on the outer ring 120 by the separating springs 125a located between the outer segments will then cause the outer ring 120 to expand, disengaging it from the outer cone surface of the hub 101 so as to break the drive coupling therethrough. Similarly, the biasing force exerted on the inner ring 115 by the spring clip 125b provided around the segments of the inner ring 115 will then cause the inner ring 115 to contract into the radial clearance, disengaging it from the inner cone surface of the hub 101 and hence breaking the drive coupling through the inner ring 115. If there is no cone lock between the inner and outer rings 115, 120 and the cone of the hub 101, the friction surfaces 109,110 of the hub will simply retract from between the inner and outer rings 115, 120 leaving the segments axially unmoved.

In the embodiment illustrated in Figure 12, outer and inner release springs 135a, 135b, preferably in the form of wave of plate springs, are provided between the inner and outer rings 115, 120 respectively and the hub 101, which operate to urge the segments axially towards their associated engagement plate 111a,111b. In this way, in the case when the segments initially move axially with hub due to cone lock, once released, they will move back towards the engagement plate 111a,111b under the action of the release spring 135a, 135b, thereby maintaining the maximum separation between the segments and the cone surfaces of the hub 101 when the hub is disengaged. It will, however, be understood that in some circumstances, the release springs may be position on the other side of the synchroniser rings so as to urge the segments away from the engagement plate into positions in which they can expand/retract away from the cone surfaces of the hub 101. Furthermore, the release spring may, in some configurations, may be omitted completely. It will, of course, be understood that in all configurations the relative angles of the engaging camming surfaces must be such that no friction lock can occur between the segments and the engagement places 111a, 111b, which might prevent disengagement.

Although the above embodiment has been described with the annular recess 112 formed in the engagement plates 111a, 111b and the annular axial extension upon which the inner and outer friction surfaces are carried formed on the hub, it will, of course, be understood that the invention may also operate with the reverse configuration, i.e. with the or each conical friction surface formed on the gear or engagement plate and the pockets in which the tabs of the synchroniser rings engage formed in the hub 101.

Furthermore, in an embodiment which is not illustrated, a single segmented synchroniser ring having an outer conical friction surface may be associated with each gear, that single friction ring operating in a similar manner to the internal synchroniser ring of the embodiment of Figures 10 to 12 during engagement and disengagement of drive through the gear.

Although the invention has been described in connection with synchroniser rings for clutches, it will be understood by the skilled reader that the segmented ring of the invention has wider application in any field in which a rotational friction drive coupling is required where cone lock might be a problem, and also may be utilised where rotational frictional engagement is used as a means for arresting motion, such as in a braking system.

The present invention therefore further provides a friction coupling assembly comprising a first member having at least one conical friction surface formed thereon, a second member having a segmented ring non-rotatably coupled thereto, the segmented ring having a friction surface formed thereon which is engageable with the conical friction surface of the first member, and being movable between a first expanded configuration in which the ring has a first radius and a second contracted configuration in which the ring has a second radius smaller than said first radius, at least one of said first and second members being rotatable, whereby actuation of the assembly, in particular upon movement of one of said first and second members towards said other of said first and second members, said ring is urged into one of said expanded and contracted configurations such that said friction surface is pressed against the conical friction surface of the first member so as to frictionally couple said first and second members.

One of the members may be rotationally fixed such that, upon actuation, a rotation arresting force is applied to the other member, the members, for example, forming part of a vehicle braking system. Alternatively, both members may be rotatable, the segmented ring providing a drive coupling between members. The system may also have applications in torque drive systems and devices, during acceleration or declaration, or in any other drive coupling or drive assisting system which utilised a friction coupling.

It will further be understood that all developments and variants described above in connection with the synchroniser clutch embodiment of the invention are also applicable to the other possible applications for the friction coupling assembly.

## Claims

1. A synchroniser clutch assembly comprising a clutch hub assembly (1; 101) which, in use, is non-rotatably but axially movably mounted on a torque delivery shaft (5), at least one gear assembly (10, 11) which is axially spaced from the hub assembly (1) and which, in use, is journal mounted on the shaft (5) so as to be rotatable independent thereof, one of the hub assembly (1; 101) and the at least one gear assembly (10, 11) having a conical friction surface (12, 13) formed thereon, at least one synchroniser ring (15, 16) positioned between the hub assembly (1; 101) and the at least one gear assembly (10, 11), the or each synchroniser ring being coupled to the other of the hub assembly (1; 101) and the at least one gear assembly for rotation therewith and having a complementary conical friction surface (19, 20) formed thereon which is engageable with the conical friction surface (12, 13) of the one of the hub assembly (1; 101) and the at least one gear assembly (10, 11) in order create a drive coupling therebetween, wherein the or each synchroniser ring (15, 16) is composed of a plurality of separate arcuate segments (15a, 15b, 15c, 15d) arranged in a ring, which segments are movable between a first expanded configuration in which the synchroniser ring (15) has a first radius and a second contracted configuration in which the ring (15) has a second radius, movement of the hub assembly (1; 101) towards the at least one gear assembly (10, 11) urging the segments (15a, 15b, 15c, 15d) of the or each synchroniser ring, into one of said first and second configurations so that the conical friction surface (19, 20) of the ring is pressed against the friction surface of the one or the hub assembly and the gear assembly (10, 11), thereby drivingly coupling the hub assembly (1; 101) to the at least one gear assembly (10, 11).

2. A synchroniser clutch assembly according to claim 1, wherein the or each synchroniser ring (15, 16) is housed within an annular recess (19, 20) formed in the other of the hub assembly (1) and the at least one gear assembly.

3. A synchroniser clutch assembly according to claim 1 or claim 2, further including biasing means (25) associated with the or each synchroniser ring (15, 16) which urges said segments (15a, 15b, 15c, 15d) into the other of said first and second positions in which the conical friction surface (19, 20) of the or each ring (15, 16) is disengaged from the friction surface (12, 13) of the one of the hub assembly and the gear assembly (10, 11).

4. A synchroniser clutch assembly according to any of the preceding claims, wherein each segment (15a, 15b, 15c, 15d) includes a plurality of radial tabs (21) which engage in complementary shaped pockets (22) formed in the one of the hub assembly and the gear assembly (1) so as to non-rotatably couple the segments thereto.

5. A synchroniser clutch assembly according to any of the preceding claims, wherein the one of the hub assembly (1; 101) and the gear assembly (10,11) has an external conical friction surface (12, 13) formed therein which is engageable by an internal conical friction surface (19, 20) formed on the at least one synchroniser ring (15, 16), the other of the hub assembly and the gear assembly (1) co-operating with the or each synchroniser ring (15) to press said segments (15a, 15b, 15c, 15d) radially inwardly towards their second contracted configuration and into engagement with said external friction surface (12, 13) upon axial movement of the hub assembly (1) towards the gear assembly (10, 11).

6. A synchroniser clutch assembly according to claim 5, further including biasing means which urges said segments into their first, expanded configuration.

7. A synchroniser clutch assembly according to claim 5 or claim 6, wherein said biasing means comprises a separating spring (25) positioned between adjacent ring segments (15a, 15b, 15c, 15d) which urges said segments apart circumferentially.

8. A synchroniser clutch assembly according to any of claims 5 to 7, wherein the other of the hub assembly and the gear assembly limits the radial expansion of the synchroniser ring (12, 13).

9. A synchroniser clutch assembly according to any of claims 5 to 8, wherein the other of the hub assembly (1, 101) and the gear assembly includes inclined surfaces which engage with the segments and urge them towards their contracted configuration upon axial movement of the hub assembly (1) towards the gear assembly (10, 11).

10. A synchroniser clutch according to any of the preceding claims, wherein the one of the hub assembly (101) and the gear assembly has an internal friction surface (12, 13) formed thereon which is engageable by an external conical friction surface formed on the at least one synchroniser ring (110), the other of the hub assembly (101) and the gear assembly co-operating with said at least one synchroniser ring (110) to press said segments thereof radially outwardly towards their first expanded configuration and into engagement with said internal friction surface upon axial movement of the hub assembly (101) towards the gear assembly.

11. A synchroniser clutch according to claim 10, further including biasing means which urges said segments of said at least one synchroniser ring (110) into their second contracted configuration.

12. A synchroniser clutch according to claim 10 or claim 11, wherein said biasing means comprises a spring clip which extends around the outside of the segments so as to urge them radially inwards.

13. A synchroniser clutch according to any of claims 10 to 12, wherein the other of the hub assembly (101) and the gear assembly limits the radial contraction of said at least one synchroniser ring.

14. A synchroniser clutch assembly according to any of claims 10 to 13, wherein the other of the hub assembly (101) and the gear assembly includes inclined surfaces which engage with the segments to urge them towards their expanded configuration upon axial movement of the hub assembly towards the gear assembly.

15. A synchroniser clutch assembly according to any of the preceding claims, wherein a return spring (26) is provided between the one of the hub assembly and the or each gear assembly (10, 11) and the synchroniser ring (15, 16) which urges the synchroniser ring (15, 16) axially away from said one of the hub assembly and the or each gear assembly.

16. A synchroniser clutch assembly according to claim 15, wherein the return spring is a compression spring.

17. A synchroniser clutch assembly according to claim 15 or claim 16, wherein a spring plate is located between the return spring (26) and the synchroniser ring (15, 16).

18. A synchroniser clutch assembly according to any of the preceding claims, wherein the hub assembly (1; 101) has a central through opening (2) in which are formed a plurality of teeth (3) which, in use, engage with splines (6) formed on the outer surface of the shaft (5) so as to rotatably couple the hub assembly to the shaft.

19. A synchroniser clutch assembly according to any of the preceding claims, further including a second gear assembly (11) which is journal mounted on the shaft (5), the hub assembly (1) being position between the first and the second gear assemblies (10, 11) and having a second synchroniser ring positioned between the hub assembly (1) and the second gear assembly (11).

20. A synchroniser clutch assembly according to any of the preceding claims, wherein a pair of segmented synchroniser clutch rings (115, 120) are coupled to the other of the hub assembly (101) and the or each gear assembly (110, 111) for rotation therewith, one (115) of said rings having an internal conical friction surface (116) for engagement with a complementary external friction surface (109) formed on the one of the hub assembly (101) and the at least one gear assembly (10, 11) and the other (120) of said rings having an external conical friction surface (121) for engagement with a complementary internal friction surface (110) formed on the one of the hub assembly (101) and the at least one gear assembly (10, 11), whereby the drive coupling between said hub assembly and the or each gear assembly is effected through both of said pair of rings (115, 120) simultaneously.

21. A synchroniser clutch assembly according to any of the preceding claims, wherein the or each synchroniser ring (15, 16) is coupled to the hub assembly (1) for rotation therewith, the conical friction surfaces being formed on the or each gear assembly (10, 11).

22. A synchroniser clutch assembly according to any of claims 1 to 20, wherein the or each synchroniser ring (115, 120) is coupled to a gear assembly (10, 11) for rotation therewith, the or each conical friction surface (109, 121) being formed on the hub assembly (101).

23. A synchroniser clutch assembly according to any of the preceding claims, wherein the or each gear assembly (10, 11) includes an engagement plate (11a, 11b) which is non-rotatably coupled to its associated gear and through which drive between the or each synchroniser ring (115, 120) and the associated gear is transmitted.

24. A synchroniser clutch assembly according to any of the preceding claims, wherein the or each hub assembly includes at least one engagement plate which is non-rotatably coupled to the hub (1) and through which drive between the or each synchroniser ring (15, 16) and the hub (1) is transmitted.

25. A synchroniser ring (15, 16) for a synchroniser clutch assembly according to any of the preceding claims, comprising a plurality of separate arcuate segments (15a, 15b, 15c, 15d) arranged to form a closed ring, each segment including a friction surface which together form a conical friction surface (19, 20) for the synchroniser ring (15, 16).

## Patentansprüche

1. Synchronisierkupplungseinheit mit einer Kupplungsnabeneinheit (1; 101), die im Betrieb nicht drehbar, jedoch axial beweglich auf einer Drehmomentabgabewelle (5) montiert ist, mindestens einer Zahnradeinheit (10, 11), die axial von der Nabeneinheit (1) beabstandet und im Betrieb drehbar auf der Welle (5) montiert ist, so dass sie sich unabhängig davon drehen kann, wobei die Nabeneinheit (1; 101) oder die mindestens eine Zahnradeinheit (10, 11) eine darauf ausgebildete konische Reibfläche (12, 13) besitzt, mindestens einem Synchronisierring (15, 16), der zwischen der Nabeneinheit (1; 101) und der mindestens einen Zahnradeinheit (10, 11) angeordnet ist, wobei der oder jeder Synchronisierring mit der anderen Einheit von der Nabeneinheit (1; 101) und der mindestens einen Zahnradeinheit gekoppelt ist, um sich zusammen mit dieser zu drehen, und eine darauf ausgebildete komplementäre konische Reibfläche (19, 20) besitzt, die mit der konischen Reibfläche (12, 13) der Nabeneinheit (1; 101) oder der mindestens einen Zahnradeinheit (10, 11) in Eingriff bringbar ist, um hierzwischen eine Antriebskupplung auszubilden, wobei der oder jeder Synchronisierring (15, 16) aus einer Vielzahl von getrennten bogenförmigen Segmenten (15a, 15b, 15c, 15d) besteht, die in einem Ring angeordnet und zwischen einer ersten expandierten Konfiguration, in der der Synchronisierring (15) einen ersten Radius besitzt, und einer zweiten zusammengezogenen Konfiguration, in der der Ring (15) einen zweiten Radius besitzt, bewegbar sind, wobei durch die Bewegung der Nabeneinheit (1; 101) in Richtung auf die mindestens eine Zahnradeinheit (10, 11) die Segmente (15a, 15b, 15c, 15d) des oder jeden Synchronisierringes in die erste oder zweite Konfiguration gedrückt werden, so dass die konische Reibfläche (19, 20) des Ringes gegen die Reibfläche der Nabeneinheit oder der Zahnradeinheit (10, 11) gepresst wird und auf diese Weise die Nabeneinheit (1; 101) mit der mindestens einen Zahnradeinheit (10, 11) treibend verbunden wird.

2. Synchronisierkupplungseinheit nach Anspruch 1, bei der der oder jeder Synchronisierring (15, 16) in einer ringförmigen Ausnehmung (19, 20) untergebracht ist, welche in der anderen Einheit der Nabeneinheit (1) und der mindestens einen Zahnradeinheit ausgebildet ist.

3. Synchronisierkupplungseinheit nach Anspruch 1 oder 2, die des weiteren eine dem oder jedem Synchronisierring (15, 16) zugeordnete Vorspanneinrichtung (25) aufweist, die die Segmente (15a, 15b, 15c, 15d) in die andere der ersten und zweiten Position drückt, in der die konische Reibfläche (19, 20) des oder jeden Ringes (15, 16) mit der Reibfläche (12, 13) der Nabeneinheit oder der Zahnradeinheit (10, 11) außer Eingriff gebracht ist.

4. Synchronisierkupplungseinheit nach einem der vorangehenden Ansprüche, bei der jedes Segment (15a, 15b, 15c, 15d) eine Vielzahl von radialen Ansätzen (21) aufweist, die mit komplementär geformten Taschen (22) in Eingriff stehen, welche in der Nabeneinheit oder der Zahnradeinheit (1) ausgebildet sind, um die Segmente hiermit nichtdrehbar zu verbinden.

5. Synchronisierkupplungseinheit nach einem der vorangehenden Ansprüche, bei der die Nabeneinheit (1; 101) oder die Zahnradeinheit (10, 11) eine darin ausgebildete äußere konische Reibfläche (12, 13) besitzt, die mit einer inneren konischen Reibfläche (19, 20) in Eingriff bringbar ist, welche auf dem mindestens einen Synchronisierring (15, 16) ausgebildet ist, wobei die andere Einheit der Nabeneinheit und Zahnradeinheit (1) mit dem oder jedem Synchronisierring (15) zusammenwirkt, um die Segmente (15a, 15b, 15c, 15d) bei einer Axialbewegung der Nabeneinheit (1) in Richtung auf die Zahnradeinheit (10, 11) radial nach innen in Richtung auf ihre zweite zusammengezogene Konfiguration und in Eingriff mit der äußeren Reibfläche (12, 13) zu pressen.

6. Synchronisierkupplungseinheit nach Anspruch 5, die des weiteren eine Vorspanneinrichtung aufweist, die die Segmente in ihre erste expandierte Konfiguration drückt.

7. Synchronisierkupplungseinheit nach Anspruch 5 oder 6, bei der die Vorspanneinrichtung eine Trennfeder (25) aufweist, die zwischen benachbarten Ringsegmenten (15a, 15b, 15c, 15d) angeordnet ist und die Segmente in Umfangsrichtung voneinander wegdrückt.

8. Synchronisierkupplungseinheit nach einem der Ansprüche 5 bis 7, bei der die andere Einheit der Nabeneinheit und der Zahnradeinheit die radiale Expansion des Synchronisierringes (12, 13) begrenzt.

9. Synchronisierkupplungseinheit nach einem der Ansprüche 5 bis 8, bei der die andere Einheit der Nabeneinheit (1, 101) und der Zahnradeinheit geneigte Flächen aufweist, die mit den Segmenten in Eingriff stehen und diese bei einer Axialbewegung der Nabeneinheit (1) in Richtung auf die Zahnradeinheit (10, 11) in Richtung auf ihre zusammengezogene Konfiguration drücken.

10. Synchronisierkupplung nach einem der vorangehenden Ansprüche, bei der die Nabeneinheit (101) oder die Zahnradeinheit eine darauf ausgebildete innere Reibfläche (12, 13) besitzt, die mit einer äußeren konischen Reibfläche in Eingriff bringbar ist, welche auf dem mindestens einen Synchronisierring (110) ausgebildet ist, wobei die andere Einheit der Nabeneinheit (101) und der Zahnradeinheit mit dem mindestens einen Synchronisierring (110) zusammenwirkt, um bei einer Axialbewegung der Nabeneinheit (101) in Richtung auf die Zahnradeinheit die Segmente des Ringes radial nach außen in Richtung auf ihre erste expandierte Konfiguration und in Eingriff mit der inneren Reibfläche zu pressen.

11. Synchronisierkupplung nach Anspruch 10, die des weiteren eine Vorspanneinrichtung aufweist, die die Segmente des mindestens einen Synchronisierringes (110) in ihre zweite zusammengezogene Konfiguration drückt.

12. Synchronisierkupplung nach Anspruch 10 oder 11, bei der die Vorspanneinrichtung eine Federklemme aufweist, die sich um die Außenseite der Segmente erstreckt, um diese radial nach innen zu drücken.

13. Synchronisierkupplung nach einem der Ansprüche 10 bis 12, bei der die andere Einheit der Nabeneinheit (101) und der Zahnradeinheit die radiale Kontraktion des mindestens einen Synchronisierringes begrenzt.

14. Synchronisierkupplungseinheit nach einem der Ansprüche 10 bis 13, bei der die andere Einheit der Nabeneinheit (101) und der Zahnradeinheit geneigte Flächen aufweist, die mit den Segmenten in Eingriff stehen, um diese bei einer Axialbewegung der Nabeneinheit in Richtung auf die Zahnradeinheit in Richtung auf ihre expandierte Konfiguration zu drücken.

15. Synchronisierkupplungseinheit nach einem der vorangehenden Ansprüche, bei der eine Rückzugsfeder (26) zwischen der Nabeneinheit und der oder jeder Zahnradeinheit (10, 11) vorgesehen ist, die den Synchronisierring (15, 16) von der Nabeneinheit oder der oder jeder Zahnradeinheit axial wegdrückt.

16. Synchronisierkupplungseinheit nach Anspruch 15, bei der die Rückzugsfeder eine Druckfeder ist.

17. Synchronisierkupplungseinheit nach Anspruch 15 oder 16, bei der eine Federplatte zwischen der Rückzugsfeder (26) und dem Synchronisierring (15, 16) angeordnet ist.

18. Synchronisierkupplungseinheit nach einem der vorangehenden Ansprüche, bei der die Nabeneinheit (1; 101) eine mittlere Durchgangsöffnung (2) besitzt, in der eine Vielzahl von Zähnen (3) ausgebildet ist, die im Betrieb mit Nuten (6) in Eingriff stehen, welche auf der Außenfläche der Welle (5) ausgebildet sind, um die Nabeneinheit mit der Welle drehbar zu verbinden.

19. Synchronisierkupplungseinheit nach einem der vorangehenden Ansprüche, die des weiteren eine zweite Zahnradeinheit (11) aufweist, die drehbar auf der Welle (5) montiert ist, wobei die Nabeneinheit (1) zwischen der ersten und der zweiten Zahnradeinheit (10, 11) angeordnet ist und einen zweiten Synchronisierring aufweist, der zwischen der Nabeneinheit (1) und der zweiten Zahnradeinheit (11) angeordnet ist.

20. Synchronisierkupplungseinheit nach einem der vorangehenden Ansprüche, bei der ein Paar von segmentierten Synchronisierkupplungsringen (115, 120) mit der anderen Einheit der Nabeneinheit (101) und der oder jeder Zahnradeinheit (110, 111) verbunden ist, um sich hiermit zu drehen, wobei einer (115) der Ringe eine innere konische Reibfläche (116) zum Eingriff mit einer komplementären äußeren Reibfläche (109) aufweist, die auf der Nabeneinheit (101) oder der mindestens einen Zahnradeinheit (10, 11) ausgebildet ist, und der andere (120) der Ringe eine äußere konische Reibfläche (121) zum Eingriff mit einer komplementären inneren Reibfläche (110) besitzt, die auf der Nabeneinheit (101) oder der mindestens einen Zahnradeinheit (10, 11) ausgebildet ist, und wobei die Antriebskupplung zwischen der Nabeneinheit und der oder jeder Zahnradeinheit gleichzeitig über beide Ringe des Paares der Ringe (115, 120) bewerkstelligt wird.

21. Synchronisierkupplungseinheit nach einem der vorangehenden Ansprüche, bei der der oder jeder Synchronisierring (15, 16) drehbar mit der Nabeneinheit (1) verbunden ist, wobei die konischen Reibflächen auf der oder jeder Zahnradeinheit (10, 11) ausgebildet sind.

22. Synchronisierkupplungseinheit nach einem der Ansprüche 1 bis 20, bei der der oder jeder Synchronisierring (115, 120) drehbar mit einer Zahnradeinheit (10, 11) verbunden ist, wobei die oder jede konische Reibfläche (109, 121) auf der Nabeneinheit (101) ausgebildet ist.

23. Synchronisierkupplungseinheit nach einem der vorangehenden Ansprüche, bei der die oder jede Zahnradeinheit (10, 11) eine Eingriffsplatte (11a, 11b) aufweist, die nichtdrehbar mit ihrem zugehörigen Zahnrad verbunden ist und über die die Antriebskraft zwischen dem oder jedem Synchronisierring (115, 120) und dem zugehörigen Zahnrad übertragen wird.

24. Synchronisierkupplungseinheit nach einem der vorangehenden Ansprüche, bei der die oder jede Nabeneinheit mindestens eine Eingriffsplatte aufweist, die nichtdrehbar mit der Nabe (1) verbunden ist und über die die Antriebskraft zwischen dem oder jedem Synchronisierring (15, 16) und der Nabe (1) übertragen wird.

25. Synchronisierring (15, 16) für eine Synchronisierkupplungseinheit nach einem der vorangehenden Ansprüche, der eine Vielzahl von getrennten bogenförmige Segmenten (15a, 15b, 15c, 15d) aufweist, die so angeordnet sind, dass sie einen geschlossenen Ring bilden, wobei jedes Segment eine Reibfläche aufweist, die zusammen eine konische Reibfläche (19, 20) für den Synchronisierring (15, 16) bilden.

## Revendications

1. Assemblage d'embrayage de synchronisation comprenant un assemblage de moyeu d'embrayage (1 ; 101) qui, en utilisation, est monté de manière non rotative mais de manière à pouvoir être déplacé axialement sur un arbre de sortie de couple (5), au moins un assemblage d'engrenages (10, 11) qui est espacé de manière axiale de l'assemblage de moyeu (1) et qui, en utilisation, est monté par tourbillon à l'arbre (5) de sorte à pouvoir être tourné de manière indépendante à celui-là, l'un de l'assemblage de moyeu (1; 101) et du au moins un assemblage d'engrenages (10, 11) ayant une surface de friction conique (12, 13) formée sur celui-là, au moins une bague de synchronisation (15, 16) positionnée entre l'assemblage de moyeu (1 ; 101) et le au moins un assemblage d'engrenages (10, 11), la ou chaque bague de synchronisation étant couplée à l'autre de l'assemblage de moyeu (1 ; 101) et du au moins un assemblage d'engrenages pour une rotation avec celui-là est ayant une surface de friction conique complémentaire (19, 20) formée sur celui-là qui peut être mise en prise avec la surface de friction conique (12, 13) de l'un de l'assemblage de moyeu (1 ; 101) et du au moins un assemblage d'engrenages (10, 11) afin de créer un couplage d'entraînement entre ceux-là, dans lequel la ou chaque bague de synchronisation (15, 16) est composée d'une pluralité de segments arqués distincts (15a, 15b, 15c, 15d) disposés dans une bague, lesquels segments sont mobiles entre une première configuration déployée dans laquelle la bague de synchronisation (15) a un premier rayon, et une seconde configuration contractée dans laquelle la bague (15) a un second rayon, le mouvement de l'assemblage de moyeu (1 ; 101) vers le au moins un assemblage d'engrenages (10, 11) poussant les segments (15a, 15b, 15c, 15d) de la ou de chaque bague de synchronisation, dans l'une desdites première et seconde configurations de telle sorte que la surface de friction conique (19, 20) de la bague est pressée contre la surface de friction de l'un de l'assemblage de moyeu et de l'assemblage d'engrenages (10, 11), couplant, de ce fait, de manière entraînante l'assemblage de moyeu (1 ; 101) à au moins un assemblage d'engrenages (10, 11).

2. Assemblage d'embrayage de synchronisation selon la revendication 1, dans lequel la ou chaque bague de synchronisation (15, 16) est logée à l'intérieur d'un renfoncement annulaire (19, 20) formé dans l'autre de l'assemblage de moyeu (1) et du au moins un assemblage d'engrenages.

3. Assemblage d'embrayage de synchronisation selon la revendication 1 ou la revendication 2, incluant, en outre, un moyen de sollicitation (25) associé à la ou à chaque bague de synchronisation (15, 16) qui pousse lesdits segments (15a, 15b, 15c, 15d) dans l'autre desdites première et seconde positions, dans laquelle la surface de friction conique (19, 20) de la ou de chaque bague (15, 16) est désengrenée de la surface de friction (12, 13) de l'un de l'assemblage de moyeu et de l'assemblage d'engrenages (10, 11).

4. Assemblage d'embrayage de synchronisation selon l'une quelconque des revendications précédentes, dans lequel chaque segment (15a, 15b, 15c, 15d) inclut une pluralité de pattes radiales (21) qui sont en prise dans des poches d'une forme complémentaire (22) formées dans l'un de l'assemblage de moyeu et de l'assemblage d'engrenages (1) de sorte à coupler de manière non rotative les segments à celui-là.

5. Assemblage d'embrayage de synchronisation selon l'une quelconque des revendications précédentes, dans lequel l'un de l'assemblage de moyeu (1 ; 101) et de l'assemblage d'engrenages (10, 11) a une surface de friction conique externe (12, 13) formée sur celui-là qui peut être mise en prise par une surface de friction conique interne (19, 20) formée sur la au moins une bague de synchronisation (15, 16), l'autre de l'assemblage de moyeu et de l'assemblage d'engrenages (1) coopérant avec la ou avec chaque bague de synchronisation (15) pour presser lesdits segments (15a, 15b, 15c, 15d) de manière radiale vers l'intérieur vers leur seconde configuration contractée et en prise avec ladite surface de friction externe (12, 13) lors du mouvement axial de l'assemblage de moyeu (1) vers l'assemblage d'engrenages (10, 11) .

6. Assemblage d'embrayage de synchronisation selon la revendication 5, incluant, en outre, un moyen de sollicitation qui pousse lesdits segments dans leur première configuration déployée.

7. Assemblage d'embrayage de synchronisation selon la revendication 5 ou la revendication 6, dans lequel ledit moyen de sollicitation comprend un ressort de séparation (25) positionné entre les segments de bague adjacents (15a, 15b, 15c, 15d) qui pousse à part lesdits segments de manière circonférentielle.

8. Assemblage d'embrayage de synchronisation selon l'une quelconque des revendications 5 à 7, dans lequel l'autre de l'assemblage de moyeu et de l'assemblage d'engrenages limite la dilatation radiale de la bague de synchronisation (12, 13).

9. Assemblage d'embrayage de synchronisation selon l'une quelconque des revendications 5 à 8, dans lequel l'autre de l'assemblage de moyeu (1 ; 101) et de l'assemblage d'engrenages inclut des surfaces inclinées qui sont en prise avec les segments et qui les poussent vers leur configuration contractée lors du mouvement axial de l'assemblage de moyeu (1) vers l'assemblage d'engrenages (10, 11).

10. Assemblage d'embrayage de synchronisation selon l'une quelconque des revendications précédentes, dans lequel l'un de l'assemblage de moyeu (101) et de l'assemblage d'engrenages a une surface de friction conique interne (12, 13) formée sur celui-là qui peut être mise en prise par une surface de friction conique externe formée sur la au moins une bague de synchronisation (110), l'autre de l'assemblage de moyeu (101) et de l'assemblage d'engrenages coopérant avec ladite au moins une bague de synchronisation (110) pour presser lesdits segments de celle-là de manière radiale vers l'extérieur vers leur première configuration déployée et en prise avec ladite surface de friction interne lors du mouvement axial de l'assemblage de moyeu (101) vers l'assemblage d'engrenages.

11. Assemblage d'embrayage de synchronisation selon la revendication 10, incluant, en outre, un moyen de sollicitation qui pousse lesdits segments de ladite au moins une bague de synchronisation (110) dans leur seconde configuration contractée.

12. Assemblage d'embrayage de synchronisation selon la revendication 10 ou la revendication 11, dans lequel ledit moyen de sollicitation comprend une pince à ressort qui s'étend autour de l'extérieur des segments de sorte à les pousser radialement vers l'intérieur.

13. Assemblage d'embrayage de synchronisation selon l'une quelconque des revendications 10 à 12, dans lequel l'autre de l'assemblage de moyeu (101) et de l'assemblage d'engrenages limite la contraction radiale de ladite au moins une bague de synchronisation.

14. Assemblage d'embrayage de synchronisation selon l'une quelconque des revendications 10 à 13, dans lequel l'autre de l'assemblage de moyeu (101) et de l'assemblage d'engrenages inclut des surfaces inclinées qui sont en prise avec les segments pour les pousser vers leur configuration déployée lors du mouvement axial de l'assemblage de moyeu vers l'assemblage d'engrenages.

15. Assemblage d'embrayage de synchronisation selon l'une quelconque des revendications précédentes, dans lequel un ressort de rappel (26) est prévu entre l'un de l'assemblage de moyeu et de l'assemblage d'engrenages ou de chaque assemblage d'engrenages (10, 11) et de la bague de synchronisation (15, 16) qui pousse axialement la bague de synchronisation (15, 16) loin de l'un de l'assemblage de moyeu et de l'assemblage d'engrenages ou de chaque assemblage d'engrenages.

16. Assemblage d'embrayage de synchronisation selon la revendication 15, dans lequel le ressort de rappel est un ressort de compression.

17. Assemblage d'embrayage de synchronisation selon la revendication 15 ou la revendication 16, dans lequel une lame de ressort est située entre le ressort de rappel (26) et la bague de synchronisation (15, 16).

18. Assemblage d'embrayage de synchronisation selon l'une quelconque des revendications précédentes, dans lequel l'assemblage de moyeu (1 ; 101) a une ouverture de passage centrale (2) dans laquelle sont formées une pluralité de dents (3) qui, en utilisation, sont en prise avec les cannelures (6) formées sur la surface externe de l'arbre (5) de sorte à coupler de manière rotative l'assemblage de moyeu à l'arbre.

19. Assemblage d'embrayage de synchronisation selon l'une quelconque des revendications précédentes, incluant, en outre, un second assemblage d'engrenages (11) qui est monté par tourbillon sur l'arbre (5), l'assemblage de moyeu (1) étant positionné entre les premier et second assemblages d'engrenages (10, 11) et ayant une seconde bague de synchronisation positionnée entre l'assemblage de moyeu (1) et le second assemblage d'engrenages (11).

20. Assemblage d'embrayage de synchronisation selon l'une quelconque des revendications précédentes, dans lequel une paire de bagues d'embrayage de synchronisation segmentées (115, 120) sont couplées à l'autre de l'assemblage de moyeu (101) et de l'assemblage d'engrenages ou de chaque assemblage d'engrenages (110, 111) pour une rotation avec celui-là, l'une (115) desdites bagues ayant une surface de friction conique interne (116) pour une mise en prise avec une surface de friction externe complémentaire (109) formée sur l'un de l'assemblage de moyeu (101) et de l'assemblage d'engrenages ou de chaque assemblage d'engrenages (10, 11) et l'autre (120) desdites bagues ayant une surface de friction conique externe (121) pour une mise en prise avec une surface de friction interne complémentaire (110) formée sur l'un de l'assemblage de moyeu (101) et du au moins un assemblage d'engrenages (10, 11) de sorte que le couplage d'entraînement entre ledit assemblage de moyeu et l'assemblage d'engrenages ou chaque assemblage d'engrenages est effectué simultanément grâce à l'une et l'autre de ladite paire de bagues (115, 120).

21. Assemblage d'embrayage de synchronisation selon l'une quelconque des revendications précédentes, dans lequel la ou chaque bague de synchronisation (15, 16) est couplée à l'assemblage de moyeu (1) pour une rotation avec celui-là, les surfaces de friction coniques étant formées sur l'assemblage d'engrenages ou sur chaque assemblage d'engrenages (10, 11).

22. Assemblage d'embrayage de synchronisation selon l'une quelconque des revendications 1 à 20, dans lequel la ou chaque bague de synchronisation (115, 120) est couplée à un assemblage d'engrenages (10, 11) pour une rotation avec celui-là, la ou chaque surface de friction conique (109, 121) étant formée sur l'assemblage de moyeu (101).

23. Assemblage d'embrayage de synchronisation selon l'une quelconque des revendications précédentes, dans lequel l'assemblage d'engrenages ou chaque assemblage d'engrenages (10, 11) inclut une plaque de mise en prise (11a, 11b) qui est couplée de manière non rotative à son engrenage associé et grâce à laquelle l'entraînement entre la ou chaque bague de synchronisation (115, 120) et l'engrenage associé est transmis.

24. Assemblage d'embrayage de synchronisation selon l'une quelconque des revendications précédentes, dans lequel l'assemblage de moyeu ou chaque assemblage de moyeu inclut au moins une plaque de mise en prise qui est couplée de manière non rotative au moyeu (1) et grâce à laquelle l'entraînement entre la ou chaque bague de synchronisation (15, 16) et le moyeu (1) est transmis.

25. Bague de synchronisation (15, 16) pour un assemblage d'embrayage de synchronisation selon l'une quelconque des revendications précédentes, comprenant une pluralité de segments arqués distincts (15a, 15b, 15c, 15d) arrangés pour former une bague fermée, chaque segment incluant une surface de friction qui forment ensemble une surface de friction conique (19, 20) pour la bague de synchronisation (15, 16).
